# FASCICULE DE BREVET EUROPEEN

(11) **EP 1 160 510 B1**
(45) Date de publication et mention de la délivrance du brevet: **28.09.2005**
(21) Numéro de dépôt: 00401448.6
(22) Date de dépôt: 24.05.2000
(51) Int. Cl.: F23G 7/00, F23G 5/44, C02F 11/06

(54) **Dispositif pour réaliser l'injection de boues dans un incinérateur**
Vorrichtung zur Schlammeinspritzung in einem Müllverbrennungsofen
Device to inject sludge into an incinerator

(43) Date de publication de la demande: 05.12.2001
(73) Titulaire: ONDEO DEGREMONT, 92500 Rueil-Malmaison (FR)
(72) Inventeur: Suhr, Patrick, 92500 Rueil Malmaison (FR)
(74) Mandataire: Peaucelle, Chantal

(56) Documents cités:
- EP-A- 0 665 407
- WO-A-91/04445
- DE-C- 19 737 438
- FR-A- 2 700 605
- US-A- 3 559 595
- US-A- 3 642 583

## Description

La présente invention est relative à un dispositif permettant de réaliser une introduction de boues, notamment de stations d'épuration, par injection dans la chambre de combustion d'un incinérateur, par exemple un incinérateur d'ordures ménagères.

On connaît (WO 91/04445) un dispositif permettant de réaliser l'injection de boues dans la chambre de combustion d'un incinérateur qui comporte au moins un injecteur de petit diamètre, traversant les moyens de protection thermique de la chambre de combustion et qui est alimenté par l'intermédiaire d'une chambre de distribution, la régulation thermique de chaque injecteur étant réalisée de manière à obtenir dans l'injecteur, la formation, au fur et à mesure de l'injection, d'un boudin calibré de boues comportant une croûte superficielle dans la zone proche de la zone de combustion.

Dans cet état antérieur de la technique, il est également prévu des moyens permettant d'assurer un débouchage et/ou un nettoyage et/ou l'obturation des différents injecteurs, chacun de ces moyens étant constitué par une tige, traversant la paroi de la chambre de distribution et pénétrant dans l'injecteur, lesdites tiges pouvant être manoeuvrées manuellement ou par tout moyen approprié, notamment des vérins.

La mise en oeuvre industrielle d'un tel dispositif a entrainé un certain nombre de difficultés ou de carences résultant notamment d'une mauvaise intégration des conditions devant être respectées pour réaliser une injection homogène de la boue dans la chambre de combustion, conduisant à une incinération satisfaisante de la boue, ce qui constitue l'objectif recherché, ces inconvénients résultant également d'une mauvaise prise en compte des hautes températures dans l'incinérateur.

L'expérience révèle qu'il convient de respecter un certain nombre de conditions de mise en oeuvre afin de parvenir à une combustion effective et performante de la boue injectée, à savoir :
- dans le cas d'un incinérateur à grille, qui constitue le cas très majoritaire dans le parc actuel des incinérateurs d'ordures ménagères, il convient d'éviter que l'injection des boudins de boues ne soit pas trop localisée sur le lit d'ordures ménagères, ce dernier devant être aéré (c'est-à-dire présenter une densité de 0,4 à 0,5) et risquant ainsi de recevoir une « chapée » de boues (de densité 1,1) conduisant à une mauvaise combustion et donc à la production d'imbrûlés. Il est donc nécessaire de réaliser une injection régulière de la boue sur toute la largeur de la grille de l'incinérateur. Or, les grilles des incinérateurs présentent communément une largeur de 3 à 5 mètres, voire de 10 mètres ,ce qui impose une construction particulière de la chambre d'alimentation des injecteurs ainsi que des points d'injection dans cette dernière, afin qu'une chambre d'alimentation de telles dimensions puisse être réalisable et que les injecteurs les plus éloignés de l'alimentation de boues ne soient pas sous-alimentés du fait des pertes de charge en ligne;
- afin d'obtenir une équirépartition du débit de boues sur l'ensemble des injecteurs, l'expérience a montré qu'il était nécessaire de dimensionner le nombre d'injecteurs de façon telle que le débit de boues pour un injecteur ayant un diamètre de 22 mm se situe entre 50 et 250 kg/h. A moins de 50 kg/h par injecteur, la boue risque de sécher au contact de l'injecteur et de s'y coller ce qui entraine des risques de colmatage répétés. Or le dispositif selon l'état antérieur de la technique mentionné ci-dessus ne prévoit pas de moyens permettant d'injecter la boue de façon flexible et à débit variable, avec possibilité de descendre, avec la même fiabilité, en dessous du seuil des 50 kg/h de boue par injecteur.

Par ailleurs, dans le dispositif décrit dans la publication mentionnée ci-dessus on constate une carence de la prise en compte des effets des hautes températures. Ces effets sont de divers ordres notamment :
- un effet de dilatation des moyens de protection thermique lorsque ceux-ci intègrent des faisceaux tubulaires du système de récupération de la chaleur de l'incinérateur, ce qui constitue une configuration très répandue dans le parc actuel des incinérateurs d'ordures ménagères. La non prise en compte de cette dilatation conduit à des risques de déformation irréversible des injecteurs lesquels sont fixés sur la chambre d'alimentation en boue qui reste à température ambiante, les injecteurs ne subissant donc pas de dilatation. A titre d'exemple, les parois des faisceaux tubulaires des systèmes de récupération sont généralement à une température de 250°C (température de la vapeur surchauffée circulant dans ces tubes) ce qui provoque une dilatation entre les phases d'arrêt et de marche de l'incinérateur de 2,3 mm par mètre de largeur de l'incinérateur, soit 9 mm pour un incinérateur ayant une largeur de 4 mètres ou 23 mm pour un incinérateur de 10 mètres de largeur. On comprend que ces valeurs sont loin d'être négligeables et que l'utilisation d'injecteurs à entraxes fixes donne lieu à un certain nombre d'inconvénients :

- une présence de cendres volantes dans le four d'incinérateur qui, au-delà d'une température de 1000°C, valeur couramment atteinte dans les incinérateurs, deviennent collantes, voire vitrifiantes, et peuvent donc, en se déposant dans les injecteurs à l'occasion d'un arrêt de l'injection de boue donner naissance à des incrustations qui résistent aux moyens de débouchage/décolmatage en provoquant ainsi des dysfonctionnements durables;
- un risque de corrosion des pièces du système d'injection. En effet, les gaz émis par la combustion sont particulièrement corrosifs dans la mesure où certains composés, tels que le chlore par exemple, peuvent se recomposer avec de la vapeur d'eau sous forme d'acide chlorhydrique. Il est donc essentiel d'empêcher l'introduction de ces gaz dans le système d'injection. Or, rien n'est prévu dans l'état antérieur de la technique pour refouler ces gaz lorsque l'injection est à l'arrêt et que le système d'injection est vidé de sa boue;
- le feu dans l'incinérateur est connu pour avoir une action abrasive sur les éléments directement en contact avec ses flammes. Cette action est particulièrement spectaculaire, pour tout élément métallique de caractéristiques courantes, sans caractère réfractaire particulier. De plus, l'exposition aux flammes fait apparaître un problème de captage important de la chaleur et de transmission, par conduction, de cette chaleur intense à une portion importante de l'injecteur. L'injecteur, par sa terminaison dans le four, subit donc un effet d'abrasion et un effet de détérioration de ses caractéristiques mécaniques par exposition prolongée aux hautes températures.

Partant de cet état de la technique la présente invention se propose d'y apporter des perfectionnements permettant de garantir un fonctionnement fiable du système d'injection de boue traversant les moyens de protection thermique de la chambre de combustion de l'incinérateur.

En conséquence cette invention concerne un dispositif permettant de réaliser l'injection des boues provenant notamment de stations d'épuration d'eaux usées, dans la chambre de combustion d'un incinérateur, en particulier d'un incinérateur d'ordures ménagères à grille comportant des injecteurs de petit diamètre qui traversent les moyens de protection thermique de la chambre de combustion et qui sont alimentés par l'intermédiaire d'une chambre de distribution, chaque injecteur, constitué d'un tube, étant muni de moyens permettant d'en assurer le débouchage et/ou le nettoyage et/ou l'obturation, ce dispositif étant caractérisé en ce que lesdits injecteurs sont régulièrement répartis sur toute la largeur de la grille de l'incinérateur, selon une pluralité de groupes comportant chacun une pluralité d'injecteurs, lesdits groupes étant alimentés en boue par au moins une chambre d'alimentation, en un point situé dans le tiers central de la longueur de cette dernière, et de préférence à proximité ou au milieu de la longueur de ladite chambre, et en ce qu'il comporte une pluralité de chambres d'alimentation, de préférence alignées, alimentant chacune un groupe d'injecteurs et communiquant entre elles par leurs extrémités, l'alimentation en boue s'effectuant en un point situé dans le tiers central de la longueur de l'ensemble constitué par les chambres d'alimentation, et de préférence à proximité ou au milieu dudit ensemble, des vannes étant intercalées entre les différentes chambres afin d'isoler certaines desdites chambres de la partie alimentée en boues.

Selon un autre mode de réalisation de l'invention le dispositif comprend au moins deux chambres d'alimentation, alimentant chacune respectivement une pluralité de groupes d'injecteurs, chaque chambre étant alimentée en boue eu un point situé dans son tiers central, de préférence à proximité ou au milieu de ladite chambre, par l'intermédiaire d'une conduite et l'ensemble desdites conduites étant alimenté par une pompe unique par l'intermédiaire d'une conduite centrale sur laquelle se raccordent lesdites conduites d'alimentation.

Selon la présente invention chaque chambre d'alimentation des groupes d'injecteurs est constituée de plusieurs éléments de préférence identiques chaque élément comportant un groupe d'injecteurs, lesdits éléments étant reliés entre eux par des compensateurs de dilatation.

Selon une autre caractéristique de la présente invention, afin de résoudre les problèmes résultant de la dilatation de l'incinérateur on prévoit, outre des compensateurs de dilatation entre les différentes chambres d'alimentation des injecteurs, ou les différents éléments desdites chambres, des jeux au niveau de la traversée de la paroi de l'incinérateur par les injecteurs.

Selon l'invention on prévoit des moyens pour insuffler de l'air de ventilation au travers desdits injecteurs, lors des phases d'arrêt du dispositif, afin de refouler dans le four de l'incinérateur, toute arrivée de gaz corrosif ou de cendres volantes collantes et vitrifiantes et pour refroidir les injecteurs. Selon un exemple de réalisation ces moyens sont réalisés sous la forme d'au moins une turbine soufflante prévue, par exemple, à l'une des extrémités de la chambre d'alimentation ou en une pluralité de points sur cette dernière.

D'autres caractéristiques et avantages de l'invention ressortiront de la description faite ci-après en référence aux dessins annexés qui en illustrent divers exemples de réalisation dépourvus de tout caractère limitatif. Sur les dessins :
- la figure 1 est une vue schématique représentant un incinérateur muni des perfectionnements selon l'invention, en coupe transversale,
- la figure 2 est une vue en coupe similaire à la figure 1 illustrant un autre mode de réalisation de l'invention,
- la figure 3 illustre encore un autre exemple de réalisation de l'invention selon une vue similaire aux figures 1 et 2,
- la figure 4 est une vue de détail, en coupe par un plan vertical selon l'axe d'un injecteur et
- la figure 5 illustre en une coupe similaire à celle de la figure 1, la variante du dispositif de l'invention munie du système de ventilation des injecteurs.

Comme mentionné précédemment l'invention apporte des perfectionnements au dispositif décrit dans WO 91/04445 auquel le lecteur est prié de se reporter.

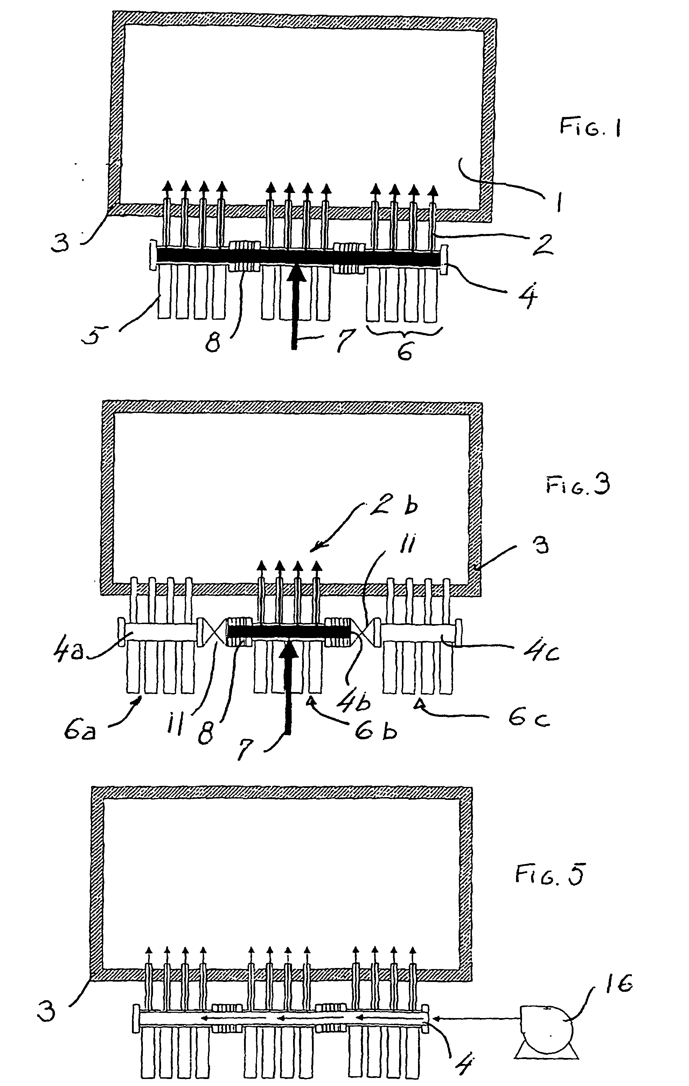

Sur la figure 1 des dessins annexés on a schématisé en 1 la chambre de combustion d'un incinérateur, notamment d'un incinérateur d'ordures ménagères. La référence 2 désigne des injecteurs tubulaires assurant l'introduction de la boue dans la chambre de combustion. Les injecteurs traversent les moyens de protection thermique 3 de la chambre de combustion et ils sont alimentés en boue par l'intermédiaire d'une chambre d'alimentation 4. Comme décrit dans la publication mentionnée ci-dessus on prévoit des moyens pour assurer un débouchage, un nettoyage et/ou une obturation de chaque tube d'injection 2. Ces moyens sont réalisés sous la forme d'une tige traversant l'injecteur et déplacé par exemple par un vérin 5.

Selon la présente invention les injecteurs sont régulièrement répartis sur toute la largeur de la grille de l'incinérateur et ils sont disposés selon une pluralité de groupes tels que 6 (3 groupes dans l'exemple de réalisation non limitatif de la figure 1), chaque groupe comportant un certain nombre d'injecteurs 2 (4 injecteurs dans l'exemple de la figure 1). Les groupes 6 d'injecteurs 2 sont tous alimentés par la chambre d'alimentation en un point situé dans le tiers central de la longueur de cette dernière, de préférence à proximité du milieu de la longueur de cette dernière, ou même en ce milieu. Sur la figure 1 on a schématisé en 7 la conduite d'alimentation en boue de la chambre 4.

Selon l'invention la chambre d'alimentation 4 peut être subdivisée en un certain nombre d'éléments identiques reliés entre eux par des compensateurs de dilatation tels que 8. Lesdits éléments, de longueur comprise entre 400 et 1500 mm, peuvent être facilement réalisés en atelier, sur des centres d'usinage classiques. L'adjonction de plusieurs de ces éléments, mis bout à bout et reliés par les compensateurs de dilatation 8 permet d'effectuer une alimentation en boue sur un incinérateur de grande largeur, pouvant aller jusqu'à 10 mètres.

L'alimentation en boue en un point d'injection situé dans le premier tiers de la chambre d'alimentation, de préférence au milieu, ou à proximité de ce milieu, de la chambre d'alimentation comme décrit ci-dessus en référence à la figure 1 est une solution appropriée pour des largeurs d'injection inférieures à 5 mètres. Pour toute largeur supérieure il faut prévoir une alimentation homogène et régulière des différents injecteurs, par exemple en multipliant les points d'arrivée de boue.

La figure 2 illustre un mode d'exécution de cette variante de l'invention.

Dans cette variante le dispositif comporte deux chambres d'alimentation 4a, 4b chacune pouvant être réalisée en plusieurs éléments identiques reliés par des compensateurs de dilatation 8 comme décrit ci-dessus en référence à la figure 1. Chaque chambre d'alimentation alimente un certain nombre de groupes 6 d'injecteurs (3 groupes comportant chacun 4 injecteurs dans l'exemple de réalisation de la figure 2) et elle est elle-même alimentée en boue en son milieu par l'intermédiaire d'une conduite 9a, 9b respectivement, ces deux conduites étant raccordées sur une conduite unique 10. Ainsi il est possible d'alimenter le dispositif à l'aide d'une seule pompe à boue (non représentée) sur la sortie de laquelle se raccorde la conduite 10. A titre d'exemple on mentionnera que la séparation en deux branches 9a, 9b de la conduite d'alimentation centrale 10 est réalisée à une distance d'environ 10 m. en amont des chambres d'alimentation 4a, 4b, ce qui permet de garantir une répartition équilibrée vers les deux points d'alimentation sur les chambres 4a, 4b, grâce aux pertes de charge de la boue générées dans les branches 9a, 9b.

Selon l'invention, le débit de boue pour un injecteur de 22 mm de diamètre doit être compris entre 50 et 250 kg/h. Cette fourchette peut être calculée au prorata de la section de passage pour des diamètres d'injecteurs compris entre 10 et 40 mm.

Selon une autre caractéristique de l'invention, si le débit total de boue que l'on désire injecter dans le four de l'incinérateur ne permet pas d'atteindre le seuil minimal ci-dessus de 50 kg/h de boue par injecteur, on isole un ou plusieurs des éléments de la chambre d'alimentation 4 à l'aide de vannes guillotines telles que 11, positionnées entre les éléments, à côté des compensateurs de dilatation 8. La figure 3 illustre un exemple de réalisation de cette variante. Dans celle-ci les boues sont injectées dans le four de l'incinérateur par l'intermédiaire de trois groupes 6a, 6b, 6c d'injecteurs, alimentés respectivement par trois éléments de chambre d'alimentation 4a, 4b, 4c, par l'intermédiaire de la conduite centrale 7. Les éléments de chambre d'alimentation 4a, 4b, 4c sont séparés les uns des autres par les vannes guillotines 11 placées à côté des compensateurs de dilatation 8.

Ainsi dans cet exemple de réalisation non limitatif un ensemble de douze injecteurs répartis sur trois éléments de chambre d'alimentation permet d'injecter de façon fiable au moins 600 kg/h de boue, exprimé en débit total. Pour effectuer une injection de boue en dessous de ce seuil, il suffit d'isoler un élément latéral 6a ou 6c et d'injecter ainsi la boue à partir d'un débit total de 400 kg/h, ou d'isoler (cas de la figure 3) les deux éléments latéraux 6a et 6c et d'injecter la boue à partir du groupe central 6b d'injecteurs 2b, à partir de 200 kg/h de débit total.

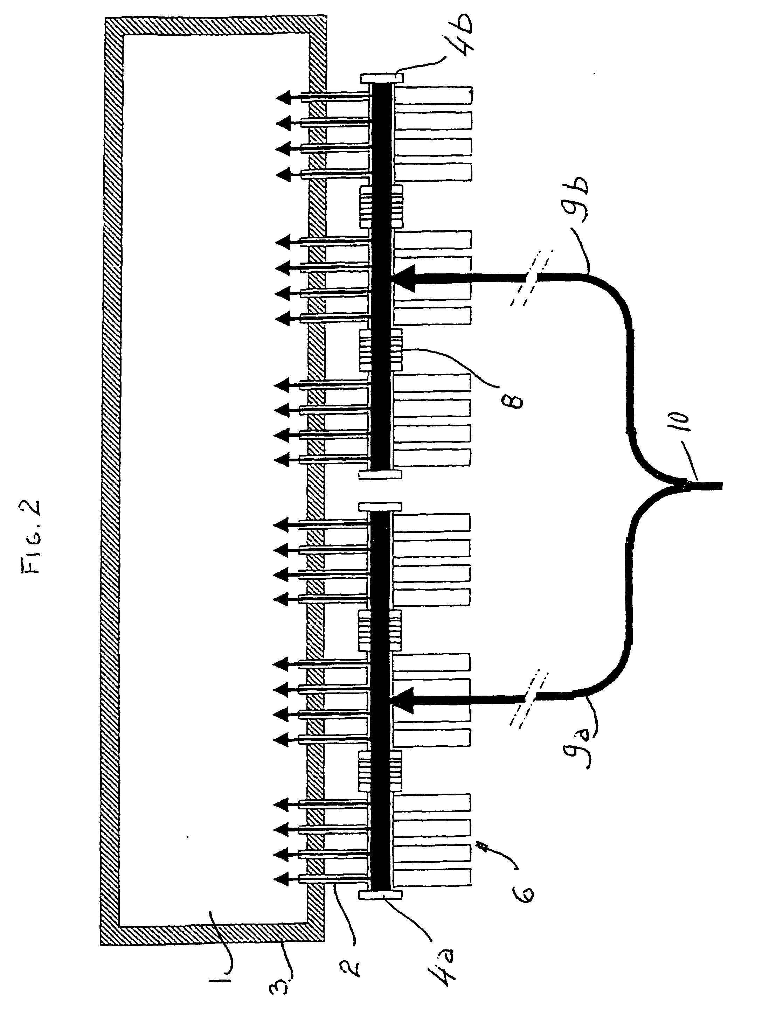

Afin de résoudre le problème de la dilatation de l'incinérateur dans le cas d'un incinérateur comportant des moyens de protection thermique 12 (figure 4), intégrant une paroi tubulaire 13, l'invention prévoit non seulement les compensateurs de dilatation 8, mentionnés ci-dessus, positionnés entre les éléments des chambres d'alimentation, mais également des jeux tels que 14 au niveau de la traversée des parois de l'incinérateur par les injecteurs tels que 2. Ces jeux 14, permettent d'absorber la dilatation de la paroi entre les phases d'arrêt et de fonctionnement du four; ils sont nécessaires sur toute pièce solidaire de la paroi du four et traversée par l'injecteur.

Afin que l'injecteur ne soit pas directement pris dans le béton réfractaire constituant la paroi du four, il est enveloppé, selon l'invention, lors du coulage de ce béton réfractaire, d'une épaisseur de fibres isolantes 16, résistant aux hautes températures, par exemple du type feutre céramique qui assure la souplesse nécessaire entre l'injecteur et la paroi du four, lorsque cette dernière se dilate. A titre d'exemple non limitatif on peut mentionner que le jeu 14 doit être au minimum de l'ordre de 3 mm.

Selon une autre caractéristique de la présente invention, l'extrémité de chaque injecteur tel que 2 est protégée par un embout 15 en un matériau réfractaire, par exemple de la fonte au chrome qui protège cette extrémité à la fois de l'abrasion des flammes et d'un captage et d'une conduction excessive de la chaleur. Cet embout 15 est une pièce scellée dans le béton réfractaire de la paroi du four 1 et elle doit comporter, par rapport à l'injecteur 2, le jeu 14 nécessaire à la dilatation de la paroi.

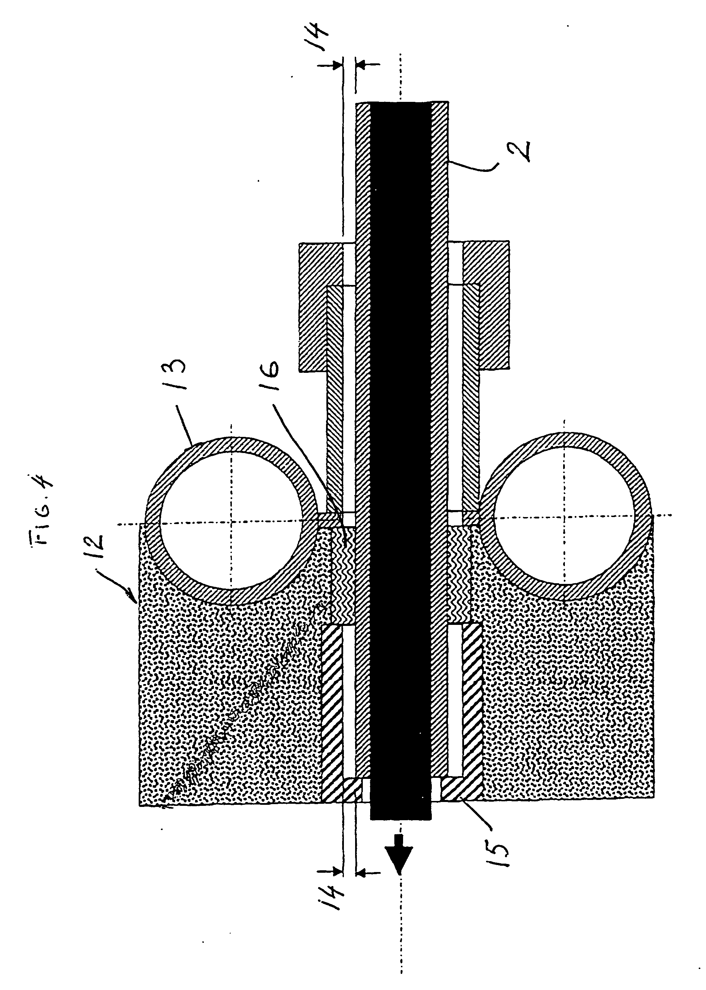

Selon une autre caractéristique de l'invention on prévoit des moyens de protection des injecteurs de diverses attaques, lorsque le système d'injection est à l'arrêt et qu'il a été vidé de sa boue par rinçage. Ces moyens (fig. 5) sont réalisés sous la forme d'au moins une turbine soufflante 16 maintenant une ventilation forcée dirigée vers le four. L'air de ventilation peut être prelevé à l'extérieur du four ou dans les gaines d'air secondaire du four. Il est introduit par la soufflante 16 dans la (ou les) chambre(s) d'alimentation telles que 4, soit par une de ses extrémités (comme illustré dans l'exemple de réalisation de la figure 5), soit par une multitude de points, par exemple pour les vannes de lavage des injecteurs. Cet air est expulsé dans le four par les injecteurs.

Cet air de ventilation protège les injecteurs à l'encontre d'un certain nombre de périls : refoulement des gaz corrosifs du four, refoulement des cendres collantes et vitrifiantes, refroidissement des injecteurs permettant ainsi de prolonger la durée de vie des injecteurs en sauvegardant plus longtemps leurs caractéristiques mécaniques.

Il demeure bien entendu que cette invention n'est pas limitée aux exemples de réalisation décrits et/ou représentés ici, mais qu'elle en englobe toutes les variantes telles que spécifiées dans les revendications annexées.

## Revendications

1. Dispositif permettant de réaliser l'injection des boues provenant notamment de stations d'épuration d'eaux usées, dans la chambre de combustion d'un incinérateur, en particulier d'un incinérateur d'ordures ménagères à grille comportant des injecteurs de petit diamètre (2) qui traversent les moyens de protection thermique (3) de la chambre de combustion et qui sont alimentés par l'intermédiaire d'une chambre de distribution, chaque injecteur, constitué d'un tube, étant muni de moyens permettant d'en assurer le débouchage et/ou le nettoyage et/ou l'obturation, ce dispositif étant **caractérisé en ce que** lesdits injecteurs (2) sont régulièrement répartis sur toute la largeur de la grille de l'incinérateur, selon une pluralité de groupes (6) comportant chacun une pluralité d'injecteurs, lesdits groupes étant alimentés en boue par au moins une chambre d'alimentation (4), en un point situé dans le tiers central de la longueur de cette dernière, et de préférence à proximité ou au milieu de la longueur de ladite chambre, et **en ce qu'**il comporte une pluralité de chambres d'alimentation (4a, 4b, 4c), de préférence alignées, alimentant chacune un groupe d'injecteurs et communiquant entre elles par leurs extrémités, l'alimentation en boue s'effectuant en un point situé dans le tiers central de la longueur de l'ensemble constitué par lesdites chambres d'alimentation, et de préférence au milieu ou à proximité du milieu dudit ensemble, des vannes (11) étant intercalées entre les différentes chambres afin d'isoler certaines desdites chambres de la partie alimentée en boues.

2. Dispositif permettant de réaliser l'injection des boues provenant notamment de stations d'épuration d'eaux usées, dans la chambre de combustion d'un incinérateur, en particulier d'un incinérateur d'ordures ménagères à grille comportant des injecteurs de petit diamètre (2) qui traversent les moyens de protection thermique (3) de la chambre de combustion et qui sont alimentés par l'intermédiaire d'une chambre de distribution, chaque injecteur, constitué d'un tube, étant muni de moyens permettant d'en assurer le débouchage et/ou le nettoyage et/ou l'obturation, ce dispositif étant **caractérisé en ce que** lesdits injecteurs (2) sont régulièrement répartis sur toute la largeur de la grille de l'incinérateur, selon une pluralité de groupes (6) comportant chacun une pluralité d'injecteurs, lesdits groupes étant alimentés en boue par au moins une chambre d'alimentation (4), en un point situé dans le tiers central de la longueur de cette dernière, et de préférence à proximité ou au milieu de la longueur de ladite chambre, et **en ce qu'**il comprend au moins deux chambres d'alimentation (4a, 4b), alimentant chacune respectivement une pluralité de groupes (6) d'injecteurs, chaque chambre étant alimentée en boue dans le tiers central de sa longueur, de préférence en son milieu ou à proximité de son milieu, par l'intermédiaire d'une conduite (9a, 9b respectivement) et l'ensemble desdites conduites étant alimenté par une pompe unique par l'intermédiaire d'une conduite centrale (10) sur laquelle se raccordent lesdites conduites d'alimentation (9a, 9b).

3. Dispositif selon la revendication 1 ou 2, **caractérisé en ce que** chaque chambre d'alimentation des groupes d'injecteurs est constituée de plusieurs éléments, de préférence identiques, chaque élément comportant un groupe d'injecteurs, lesdits éléments étant reliés entre eux par des compensateurs de dilatation (8).

4. Dispositif selon la revendication 3 **caractérisé en ce que**, afin de résoudre les problèmes résultant de la dilatation de l'incinérateur on prévoit, outre des compensateurs de dilatation (8) entre les différentes chambres d'alimentation des injecteurs, ou les différents éléments desdites chambres, des jeux (14), au niveau de la traversée de la paroi de l'incinérateur par les injecteurs.

5. Dispositif selon l'une quelconque des revendications précédentes, **caractérisé en ce que** l'on prévoit des moyens pour insuffler de l'air de ventilation au travers desdits injecteurs (2), lors des phases d'arrêt du dispositif, afin de refouler dans le four de l'incinérateur, toute arrivée de gaz corrosif ou de cendres volantes collantes et vitrifiantes et pour refroidir les injecteurs.

6. Dispositif selon la revendication 5 **caractérisé en ce que** lesdits moyens d'insufflation d'air de ventilation sont réalisés sous la forme d'au moins une turbine soufflante (16) prévue soit à l'une des extrémités de la chambre d'alimentation soit en une pluralité de points sur cette dernière.

7. Dispositif selon l'une quelconque des revendications précédentes **caractérisé en ce que** l'extrémité de chaque injecteur (2) est protégée par un embout (15) en un matériau réfractaire tel que notamment de la fonte au chrome.

8. Dispositif selon l'une quelconque des revendications précédentes **caractérisé en ce que** le nombre d'injecteurs (2) est choisi de façon à permettre d'injecter un débit total de boue respectant des valeurs de débit de boue par injecteur comprises entre 50 et 250 kg/h.

## Patentansprüche

1. Vorrichtung zum Einspritzen von insbesondere aus einer Abwasserbehandlungsanlage stammendem Schlamm in die Brennkammer eines Verbrennungsofens, speziell eines mit einem Rost versehenen Verbrennungsofens für Hausmüll, der Einspritzdüsen (2) mit kleinem Durchmesser enthält, die durch die Hitzeschutzmittel (3) der Brennkammer hindurchführen und über eine Verteilungskammer versorgt werden, wobei die jeweils aus einem Rohr bestehenden Einspritzdüsen mit Mitteln versehen sind, die es ermöglichen, sie freizumachen und/oder zu reinigen und/oder zu verschließen, wobei diese Vorrichtung **dadurch gekennzeichnet ist, dass** die Einspritzdüsen (2) regelmäßig über die gesamte Breite des Rosts des Verbrennungsofens in einer Vielzahl von Gruppen (6) verteilt sind, die jeweils eine Vielzahl von Einspritzdüsen umfassen, wobei diesen Gruppen der Schlamm durch mindestens eine Beschickungskammer (4) an einem Punkt zugeführt wird, der sich im mittleren Drittel von deren Länge und vorzugsweise in der Mitte der Länge dieser Kammer oder in der Nähe davon befindet, und dass sie eine Vielzahl von vorzugsweise zueinander ausgerichteten Beschickungskammern (4a, 4b, 4c) umfasst, die jeweils eine Gruppe von Einspritzdüsen versorgen und durch ihre Enden miteinander in Verbindung stehen, wobei der Schlamm an einem Punkt zugeführt wird, der sich im mittleren Drittel der Länge der von den Beschickungskammern gebildeten Gesamtheit und vorzugsweise in deren Mitte oder in der Nähe davon befindet, und zwischen den einzelnen Kammern Ventile (11) angeordnet sind, um einige dieser Kammern von dem Teil, welchem Schlamm zugeführt wird, zu trennen.

2. Vorrichtung zum Einspritzen von insbesondere aus einer Abwasserbehandlungsanlage stammendem Schlamm in die Brennkammer eines Verbrennungsofens, speziell eines mit einem Rost versehenen Verbrennungsofens für Hausmüll, der Einspritzdüsen (2) mit kleinem Durchmesser enthält, die durch die Hitzeschutzmittel (3) der Brennkammer hindurchführen und über eine Verteilungskammer versorgt werden, wobei die jeweils aus einem Rohr bestehenden Einspritzdüsen mit Mitteln versehen sind, die es ermöglichen, sie freizumachen und/oder zu reinigen und/oder zu verschließen, wobei diese Vorrichtung **dadurch gekennzeichnet ist, dass** die Einspritzdüsen (2) regelmäßig über die gesamte Breite des Rosts des Verbrennungsofens in einer Vielzahl von Gruppen (6) verteilt sind, die jeweils eine Vielzahl von Einspritzdüsen umfassen, wobei diesen Gruppen der Schlamm durch mindestens eine Beschickungskammer (4) an einem Punkt zugeführt wird, der sich im mittleren Drittel von deren Länge und vorzugsweise in der Mitte der Länge dieser Kammer oder in der Nähe davon befindet, und dass sie mindestens zwei Beschickungskammern (4a, 4b) umfasst, die jeweils eine andere Vielzahl von Gruppen (6) von Einspritzdüsen versorgen, wobei jeder Kammer im mittleren Drittel ihrer Länge, vorzugsweise in der Mitte oder in der Nähe davon, über eine Zuleitung (9a bzw. 9b) Schlamm zugeführt wird und alle diese Leitungen über eine zentrale Leitung (10), an welche die Zuleitungen (9a, 9b) angeschlossen sind, von einer einzigen Pumpe versorgt werden.

3. Vorrichtung nach Anspruch 1 oder 2, **dadurch gekennzeichnet, dass** jede Beschickungskammer der Gruppen von Einspritzdüsen aus mehreren vorzugsweise gleichen Komponenten besteht, wobei diese jeweils eine Gruppe von Einspritzdüsen umfassen und durch Ausgleichsverbindungen (8) miteinander verbunden sind.

4. Vorrichtung nach Anspruch 3, **dadurch gekennzeichnet, dass**, um die Probleme zu lösen, die aus der Ausdehnung des Verbrennungsofens resultieren, zwischen den einzelnen Beschickungskammern der Einspritzdüsen oder den verschiedenen Komponenten dieser Kammern an den Stellen, an denen die Einspritzdüsen durch die Wand des Verbrennungsofens führen, außer den Ausgleichsverbindungen (8) Spiele (14) vorgesehen sind.

5. Vorrichtung nach einem der vorhergehenden Ansprüche, **dadurch gekennzeichnet, dass** Mittel vorgesehen sind, um in den Stillstandsphasen der Vorrichtung Belüftungsluft durch die Einspritzdüsen (2) hindurch einzublasen, **dadurch** diese abzukühlen und korrosive Gase oder klebrige und verglasende Flugasche in die Brennkammer des Verbrennungsofens zurückzudrängen.

6. Vorrichtung nach Anspruch 5, **dadurch gekennzeichnet, dass** die Mittel zum Einblasen von Belüftungsluft in Form von mindestens einem Gebläse (16) ausgeführt sind, das entweder an einem Ende der Beschickungskammer oder an einer Vielzahl von Punkten an dieser vorgesehen ist.

7. Vorrichtung nach einem der vorhergehenden Ansprüche, **dadurch gekennzeichnet, dass** das Ende der jeweiligen Einspritzdüse (2) durch eine Mündung (15) aus einem feuerfesten Material wie insbesondere Chromgußeisen geschützt ist.

8. Vorrichtung nach einem der vorhergehenden Ansprüche, **dadurch gekennzeichnet, dass** die Anzahl der Einspritzdüsen (2) derart gewählt wird, dass sie das Einspritzen eines Gesamtdurchsatzes an Schlamm erlaubt, bei dem ein Schlammdurchsatz pro Einspritzdüse von 50 bis 250 kg/h eingehalten wird.

## Claims

1. Device making it possible to bring about the injection of sludge more particularly from waste water treatment stations into the combustion chamber of an incinerator and in particular a grate-equipped household waste incinerator having small diameter injectors (2) traversing the thermal protection means (3) of the combustion chamber and which are supplied by means of a distribution chamber, each injector, constituted by a tube, being provided with means making it possible to ensure the unblocking and/or cleaning and/or sealing thereof, said device being **characterized in that** the said injectors (2) are regularly distributed over the entire width of the incinerator grate in a plurality of groups (6), each having a plurality of injectors, said groups being supplied with sludge by at least one supply chamber (4), at a point located in the central third of the length of the latter and preferably in the vicinity or central of the length of said chamber and **in that** it has a plurality of preferably aligned supply chambers (4a, 4b, 4c), each supplying a group of injectors and communicating with one another by their ends, the sludge supply taking place at a point located in the central third of the length of the assembly constituted by said supply chambers and preferably in the centre or vicinity of the centre of said assembly, valves (11) being interposed between the different chambers in order to isolate certain of said chambers from the part supplied with sludge.

2. Device making it possible to bring about the injection of sludge more particularly from waste water treatment stations into the combustion chamber of an incinerator and in particular a grate-equipped household waste incinerator having small diameter injectors (2) traversing the thermal protection means (3) of the combustion chamber and which are supplied by means of a distribution chamber, each injector, constituted by a tube, being provided with means making it possible to ensure the unblocking and/or cleaning and/or sealing thereof, said device being **characterized in that** the said injectors (2) are regularly distributed over the entire width of the incinerator grate in a plurality of groups (6), each having a plurality of injectors, said groups being supplied with sludge by at least one supply chamber (4), at a point located in the central third of the length of the latter and preferably in the vicinity or central of the length of said chamber and **in that** it comprises at least two supply chambers (4a, 4b), each supplying respectively a plurality of groups (6) of injectors, each chamber being supplied with sludge in the central third of its length, preferably in its centre or in the vicinity of its centre, by means of a pipe (9a, 9b respectively) and all of said pipes being supplied by a single pump by means of a central pipe (10), to which are connected said supply pipes (9a, 9b).

3. Device according to claim 1 or 2, **characterized in that** each supply chamber of the groups of injectors is constituted by several, preferably identical elements, each element having a group of injectors, said elements being interconnected by expansion compensators (8).

4. Device according to claim 3, **characterized in that**, in order to solve problems resulting from the expansion of the incinerator, besides the expansion compensators (8), between the different supply chambers of the injectors or the different elements of said chambers, clearances (14) are provided at the point where the injectors traverse the incinerator wall.

5. Device according to any one of the preceding claims, **characterized in that** means are provided for blowing ventilation air through said injectors (2), during stoppage phases of the device, in order to force back into the incinerator furnace, any incoming corrosive gas or adhesive, vitrifying fly ash and in order to cool the injectors.

6. Device according to claim 5, **characterized in that** said means for blowing in ventilation air are implemented in the form of at least one blowing turbine (16) provided either at one of the ends of the supply chamber or at a plurality of points on the latter.

7. Device according to any one of the preceding claims, **characterized in that** the end of each injector (2) is projected by an end fitting (15) made from a refractory material, in particular cast chromium.

8. Device according to any one of the preceding claims, **characterized in that** the number of injectors (2) is chosen in such a way as to permit the injection of a total sludge flow respecting the sludge flow values per injector between 50 and 250 kg/h.
